**Europäisches Patentamt**

**European Patent Office**

**Office européen des brevets**

(19)

(11) Veröffentlichungsnummer : **0 050 262**
**B1**

(12) **EUROPÄISCHE PATENTSCHRIFT**

(45) Veröffentlichungstag der Patentschrift :
09.01.85

(51) Int. Cl.⁴ : **C 08 L 67/02**

(21) Anmeldenummer : **81107955.7**

(22) Anmeldetag : **06.10.81**

(54) Thermoplastische Polyester-Formmassen mit verbesserter Zähigkeit.

(30) Priorität : **16.10.80 DE 3039115**

(43) Veröffentlichungstag der Anmeldung :
**28.04.82 Patentblatt 82/17**

(45) Bekanntmachung des Hinweises auf die Patenterteilung : **09.01.85 Patentblatt 85/02**

(84) Benannte Vertragsstaaten :
**DE FR GB IT NL**

(56) Entgegenhaltungen :
**DE-A- 2 348 377**
**DE-A- 2 444 584**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Lindner, Christian, Dr.**
**Riehler Strasse 200**
**D-5000 Koeln 60 (DE)**
Erfinder : **Binsack, Rudolf, Dr.**
**Bethelstrasse 4a**
**D-4150 Krefeld (DE)**
Erfinder : **Rempel, Dieter, Dr.**
**Max-Beckmann-Strasse 35**
**D-5090 Leverkusen (DE)**
Erfinder : **Ott, Karl-Heinz, Dr.**
**Paul-Klee-Strasse 54**
**D-5090 Leverkusen (DE)**

## 0 050 262

**Beschreibung**

Die Erfindung betrifft schlagzähe Mischungen aus thermoplastischen gesättigten Polyestern aromatischer Dicarbonsäuren und aliphatischen oder cycloaliphatischen Diolen, sowie Pfropfcopolymerisaten mit einem Dienkautschuk als Kern, welcher von wenigstens zwei verschiedenen Hüllen umgeben ist.

Thermoplastische Polyester haben Bedeutung erlangt auf dem Gebiet der Fasern und auf dem Gebiet der Formmassen wegen ihrer wertvollen technologischen Eigenschaften, wie z. B. Steifigkeit, Härte, Abriebfestigkeit, dynamische und thermische Belastbarkeit. Dies gilt insbesondere für die teilkristallinen thermoplastischen Polyester, wie z. B. Polyethylenterephthalat, Poly(1,4-butylenterephthalat), Poly(1,4-cyclohexylmethylenterephthalat). Ein Nachteil dieser Formmassen ist ihre in vielen Fällen nicht immer ausreichende Schlagzähigkeit bei mehraxialer Belastung.

Es existieren zahlreiche Vorschläge, die Zähigkeit thermoplastischer Polyester durch Zumischen anderer Polymerer, insbesondere solcher auf Basis modifizierter Elastomerer und Polyolefine anzuheben. Den vorgeschlagenen Maßnahmen haftet jedoch der Nachteil an, daß die Zähigkeitsverbesserung mit einer wesentlichen Verschlechterung anderer, z. B. der oben genannten Eigenschaften einhergeht. Außerdem wird auch die mehraxiale Schlagzähigkeit nicht im gewünschten Maße erreicht.

In der DE-OS 2 444 584 werden schlagfeste Formmassen mit erhöhter Oxidations- und UV-Stabilität sowie verbessertem Schwindungsverhalten aus linearen gesättigten Polyestern und Pfropfcopolymeren beschrieben, bei denen das Pfropfcopolymer hergestellt ist durch Pfropfung von im wesentlichen Styrol und/oder Methacrylsäureester auf ein Prepolymeres auf Basis eines Acrylats und eines Monomeren mit zwei nicht konjugierten olefinischen Doppelbindungen.

In der DE-OS 2 726 256 wird die Verbesserung der Schlagzähigkeit von Polyalkylenterephthalaten durch bestimmte mehrstufige Acrylpolymerisate beschrieben, bei denen die erste Stufe eine elastomere Stufe ist, die durch Polymerisation eines Monomersystems aus einem Alkylacrylat, einem vernetzenden Monomeren und einem pfropfvernetzenden Monomeren erhalten wurde, sowie einer letzten harten thermoplastischen Stufe, die in gegenwart der ersten elastomeren Stufe polymerisiert wurde.

Die DE-OS 2 348 377 betrifft schlagfeste Formmassen aus linearen Polyestern und vernetzten kautschukelastischen Polymerisaten. Zwar werden u. a. Polybutadien als Pfropfgrundlage, Acryl- und Methacrylsäureester, Vinylacetat und Acrylnitril sowohl als Comonomere für die Polymerisatkette als auch als Pfropfmonomere und Styrol und substituierte Styrole als Pfropfmonomere genannt ; ein Aufbau entsprechend dem unserer Erfindung wird jedoch weder erwähnt noch nahegelegt.

Die genannten Druckschriften sagen nichts über die Schlagzähigkeit der beschriebenen Formmassen bei mehraxialer Belastung, obwohl diese besonders wichtig ist für die Herstellung von schlagbeanspruchten Gehäuseteilen.

Der Erfindung liegt die Erkenntnis zugrunde, daß die Schlagzähigkeit thermoplastischer Polyester bei mehraxialer Belastung verbessert werden kann durch den Zusatz von teilchenförmigen Pfropfprodukten aus einem stark vernetzten Dienkautschuk als Kern mit einer ersten Hülle aus vernetztem Acrylkautschuk und einer zweiten Hülle aus einem Polymerisat oder Copolymerisat von harzbildenden Monomeren aus der Reihe Styrol, $\alpha$-Methylstyrol, Acrylnitril, Methacrylnitril, Acrylsäureester, Methacrylsäureester oder Mischungen daraus.

Gegenstand der Erfindung sind Formmassen mit verbesserter Schlagzähigkeit bei mehraxialer Belastung aus

A) 60-99 Gew.-% (bezogen auf A + B) eines gesättigten Polyesters einer aromatischen Dicarbonsäure und einem aliphatischen oder cycloaliphatischen Diol, wobei dieser Polyester A eine Intrinsic-Viskosität von 0,5 bis 2,0 dl/g (gemessen in einem Gemisch aus Phenol und o-Dichlorbenzol (50/50 Gew.-%) bei 25 °C im Ubbelohde-Viskosimeter) besitzt, und

B) 1-40 Gew.-% (bezogen auf A + B) eines teilchenförmigen Pfropfproduktes aus

I einem vernetzten Dienkautschuk als Kern
II einem vernetzten Acrylatkautschuk als erste Hülle und
III einem Polymerisat oder Copolymerisat aus harzbildenden Monomeren aus der Reihe Styrol, $\alpha$-Methylstyrol, Acrylnitril, Methacrylnitril, Acrylsäureester, Methacrylsäureester oder Mischungen daraus als zweiter Hülle.

Das Mengenverhältnis des Kerns I zur ersten Hülle II ist 0,1 zu 99,9 bis 80 zu 20 Gew.-Teile, bevorzugt 10 zu 90 bis 50 zu 50 Gew.-Teile. Der Anteil der zweiten Hülle III am gesamten Pfropfprodukt B beträgt 10 bis 80, bevorzugt 20 bis 50 Gew.-%, bezogen auf B. Die erfindungsgemäßen Pfropfprodukte B haben mittlere Teilchendurchmesser ($d_{50}$) von 0,05 bis 3 $\mu$m, bevorzugt 0,1 bis 2 $\mu$m. Besonders bevorzugte Teilchendurchmesser sind 0,2 bis 1 $\mu$m.

Der mittlere Teilchendurchmesser $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid, Z. und Z. Polymere *250* (1972), (782-796) oder mittels Elektronenmikroskopie und anschließende Teilchenauszählung (G. Kämpf, H. Schuster, Angew. Makromolekulare Chemie *14*, (1970), 111-129) oder mittels Lichtstreuungsmessungen.

2

Das Material des Kerns I ist ein vernetzter Kautschuk aus einem oder mehreren konjugierten Dienen, wie Polybutadien oder ein Copolymerisat eines konjugierten Diens mit einem ethylenisch ungesättigten Monomer wie Styrol und/oder Acrylnitril.

Die erste Hülle II stellt einen vernetzten Acrylatkautschuk dar und ist insbesondere ein vernetztes Polymerisat aus Acrylsäurealkylestern, gegebenenfalls in Mischung mit bis zu 40 Gew.-% anderen Vinylmonomeren. Zu den geeigneten polymerisierbaren Acrylsäureestern gehören $C_1$-$C_8$-Alkylester, beispielsweise Methyl-, Ethyl-, Butyl-, Octyl- und 2-Ethylhexylester, Halogenalkylester, bevorzugt $C_1$-$C_8$-Halogenalkylester, wie Chlorethylacrylat, und aromatische Ester wie Benzylacrylat, und aromatische Ester wie Benzylacrylat und Phenethylacrylat. Sie können einzeln oder in Mischung eingesetzt werden.

Zur Vernetzung werden polyfunktionelle Monomere copolymerisiert. Beispiele sind : Ester von ungesättigten Carbonsäuren mit einem Polyol (vorzugsweise 2 bis 20 Kohlenstoffatome in der Estergruppe), wie Ethylenglykoldimethacrylat ; Ester einer mehrbasischen Carbonsäure mit einem ungesättigten Alkohol (vorzugsweise 8 bis 30 Kohlenstoffatome im Esterrest), wie Triallylcyanurat, Triallylisocyanurat ; Divinylverbindungen wie Divinylbenzol ; Ester ungesättigter Carbonsäuren mit ungesättigten Alkoholen (bevorzugt 6-12 Kohlenstoffatome im Esterrest), wie Allylmethacrylat ; Phosphorsäureester, beispielsweise Triallylphosphat ; 1,3,5-Triacryloylhexahydro-s-triazin sowie Diallylphthalat. Bevorzugte polyfunktionelle Monomere sind Allylmethacrylat, Ethylenglykoldimethacrylat, Diallylphthalat und cyclische Verbindungen, die mindestens drei ethylenisch ungesättigte Gruppen aufweisen.

Besonders bevorzugte polyfunktionelle Monomere sind die cyclischen Monomeren, wie Triallylcyanurat, Triallylisocyanurat, Trivinylcyanurat, 1,3,5-Triacryloylhexahydro-s-triazin, Trivinylbenzole, Triallylbenzole.

Die Menge der zur Vernetzung benutzten polyfunktionellen Monomeren ist bevorzugt 0,05 bis 10 Gew.-%, insbesondere 0,1 bis 5 Gew.-% der Masse der ersten Hülle II. Das Elastomer der ersten Hülle II kann zusätzlich noch ein copolymerisierbares Monomeres oder mehrere solcher Monomeren vom Vinyl- oder Vinylidentyp einpolymerisiert enthalten, wie z. B. Acrylnitril, Styrol, α-Methylstyrol, Acrylamide, Vinylalkylether. Diese Comonomeren können in Mengen bis zu 30 Gew.-% der ersten Hülle II einpolymerisiert werden.

Die zweite Hülle III stellt ein pfropfcopolymerisiertes Polymerisat aus Monomeren wie α-Methylstyrol, Styrol, Acrylnitril, Methylmethacrylat oder ein Copolymerisat aus Mischungen dieser Monomeren dar. Bevorzugt sind Copolymerisate aus Styrol und Acrylnitril im Gewichtsverhältnis 90 : 10 bis 50 : 50, sowie Polymethylmethacrylat.

Die teilchenförmigen Pfropfprodukte B können in wäßriger Emulsion wie folgt hergestellt werden :

Zunächst wird durch Emulsionspolymerisation eines konjugierten Diens der Dienkautschuk für den Kern I in Latexform hergestellt. Die Polymerisation ist bekannt. Dann wird in Gegenwart des Dienkautschuklatex, ebenfalls in wäßriger Emulsion, der Acrylatkautschuk für die erste Hülle II hergestellt, indem man das Monomer bzw. die Monomeren in dem Latex emulgiert und in an sich bekannter Weise in Gegenwart radikalbildender Initiatoren polymerisiert. Der Acrylatkautschuk polymerisiert auf den Dienkautschuk. Er kann durch Mitverwendung von polyfunktionellen Monomeren bereits bei der Herstellung vernetzt werden.

Bei dieser Pfropfcopolymerisation der ersten Hülle II muß die Bildung neuer Teilchen möglichst vollständig unterbunden werden. Ein Emulsionsstabilisator muß in einer zur Oberflächenbedeckung der Teilchen erforderlichen Menge vorhanden sein. Die Größe dieser Teilchen ist durch die Reaktionsführung in weiten Grenzen zu variieren. Verwendet man als Kern I einen agglomerierten Latex, um große Teilchen zu erhalten, so können diese mehrere Dienkautschukpartikel enthalten. Man kann die Polymerisation der ersten Hülle II auch so führen, daß Partikel mit Dienkautschukkern und gleichzeitig Partikel aus reinem vernetzten Acrylatkautschuk erzeugt werden. Auch solche Mischungen können unter besonderen Umständen zur Herstellung der erfindungsgemäßen Formmassen dienen.

Nach Beendigung der Pfropfcopolymerisation des Acrylatkautschuks wird auf den erhaltenen Latex ein Vinylmonomer oder ein Gemisch aus Vinylmonomeren der genannten Art in Emulsion polymerisiert. Dabei bilden sich die Pfropfprodukte B unter Ausbildung der zweiten Hülle III. Bei dieser an sich bekannten Pfropfcopolymerisation, die üblicherweise in Gegenwart von Radikalstartern, z. B. wasserlöslichen Initiatoren, Emulgatoren oder Komplexbildnern/Pfropfaktivatoren, sowie Reglern durchgeführt wird, bilden sich im allgemeinen neben dem eigentlichen Propfcopolymerisat in bestimmtem Ausmaß auch freie Polymerisate bzw. Copolymerisate der die zweite Hülle III bildenden Monomeren. Die Menge dieses ungepfropften Polymerisates kann durch den Pfropfgrad bzw. die Pfropfausbeute charakterisiert werden. Diese hängt ab unter anderem von den Polymerisationsbedingungen, der Zusammensetzung der ersten Hülle II, der Größe der zu pfropfenden Teilchen und der Menge an gepfropftem Acrylatkautschuk.

Pfropfprodukt B im Sinne der Erfindung ist deshalb das durch Polymerisation von Vinylmonomeren in Gegenwart des Kautschuklatex erhaltene Produkt, genau genommen also ein Gemisch aus Pfropfcopolymerisat und freiem Copolymerisat der Pfropfmonomeren, unabhängig vom Pfropfgrad.

Die so hergestellen Pfropfprodukte B können nach bekannten Verfahren aufgearbeitet werden, z. B. durch Koagulation der Latices mit Elektrolyten (Salze, Säuren oder Gemische davon) und anschließende Reinigung und Trocknung oder durch sogenannte Sprühtrocknung.

Gesättigte Polyester im Sinne der Erfindung sind Kondensationsprodukte aus aromatischen Dicarbonsäuren (oder deren Derivaten) und aliphatischen oder cycloaliphatischen Diolen, insbesondere Polyalkylenterepthalate, die man aus Terephthalsäure (Derivaten) und (Cyclo) Alkylendiolen mit 2-10 C-Atomen nach bekannten Verfahren (s. z. B. Kunststoff-Handbuch, Bd. VIII, S. 695 ff., Carl-Hanser-Verlag, München 1973 und die dort angegebenen Literaturstellen) erhalten kann. Bevorzugte Polyalkylenterephthalate sind Polyethylenterephthalat und Poly(1,4-butylenterephthalat). Die Polyalkylenterephthalate können anstelle der Terepthalsäurekomponente auch bis zu 10 Mol-% einer anderen Dicarbonsäurekomponente (aromatische und/oder aliphatische und/oder araliphatische Dicarbonsäure) so-Diole (aromatische und/oder aliphatische und/oder araliphatische Diole) enthalten. Darüberhinaus können die thermoplastischen Polyester durch Carbonsäuren bzw. Polyole mit mehr als 2 reaktiven Gruppen verzweigt sein.

Voraussetzung für den Einsatz der gesättigten Polyester ist ein genügend hohes Molekulargewicht, gekennzeichnet durch eine Intrinsic-Viskosität von 0,5 bis 2,0 dl/g, bevorzugt 0,6 bis 1,5 dl/g und besonders bevorzugt 0,7 bis 1,3 dl/g, gemessen in einem Gemisch aus Phenol und o-Dichlorbenzol (50/50 Gew.-%) bei 25 °C im Ubbelohde-Viskosimeter.

Anstelle der Homo- oder Copolyester können auch die Mischungen dieser Polyester eingesetzt werden. Bevorzugte Mischungen bestehen aus

a) 1-99, vorzugsweise 10-80, insbesondere 30-60, Gew.% Polyethylenterephthalat und
b) 99-1, vorzugsweise 90-20, insbesondere 70-40, Gew.% Poly(1,4-butylenterephthalat).

Die Polyester-Formmassen gemäß der vorliegenden Erfindung können übliche Additive, wie Gleit- und Entformungsmittel, Nucleiermittel, Stabilisatoren, Füll- und Verstärkungsstoffe, Flammschutzmittel sowie Farbstoffe enthalten.

Die gefüllten und verstärkten Polyester-Formmassen können bis zu 60 Gew.-% bezogen auf die Formmasse, eines Füllstoffes und/oder Verstärkungsstoffes enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die mit Flammschutzmitteln ausgerüsteten Polyester-Formmassen enthalten Flammschutzmittel in einer Konzentration von im allgemeinen weniger als 30 Gew.-%, bezogen auf die Formmasse.

Es kommen alle bekannten Flammschutzmittel in Frage, wie z. B. Polyhalogendiphenyl, Polyhalogendiphenylether, Polyhalogenphthalsäure und ihre Derivate und Polyhalogenpolycarbonate, wobei die entsprechenden Bromverbindungen besonders wirksam sind. Außerdem enthalten sie in der Regel einen Synergisten, wie z. B. Antimontrioxid.

Die Herstellung der erfindungsgemäßen Formmassen kann in den üblichen Mischaggregaten wie Walzen, Knetern, Ein- und Mehrwellenextrudern erfolgen. Besonders geeignet sind Doppelwellenextruder.

Die Formmassen können auf den genannten Mischaggregaten hergestellt werden, indem die beiden Komponenten A und B gemeinsam aufgeschmolzen und homogenisiert werden, oder indem das Pfropfprodukt B in die Schmelze des Polyesters A eingearbeit wird.

Die Temperatur bei der Herstellung der Mischungen sollte mindestens 10 °C und zweckmäßig höchstens 80 °C oberhalb des Schmelzpunktes des Polyesters liegen.

Nach einem vorteilhaften Verfahren wird auf einem der genannten Mischaggregate in einem ersten Schritt eine Mischung aus 35-95, vorzugsweise 50-90 Gew.-% (bezogen auf A + B) Pfropfprodukt B und 5-65, vorzugsweise 10 bis 50 Gew.-% (bezogen auf A + B) Polyester A hergestellt und in einem zweiten Schritt mit weiterem Polyester A zu den erfindungsgemäßen Formmassen verarbeitet.

Die erfindungsgemäßen Polyester-Formmassen zeichnen sich schon bei niedrigen Gehalten an Pfropfprodukt B durch eine erhebliche Verbesserung der Schlagzähigkeit bei mehraxialer Belastung auch bei Polyestern mit relativ niedrigem Molekulargewicht aus. Überraschend für die Mischungen ist auch die hohe Fließnahtfestigkeit. Darüberhinaus zeichnen sich die Formmassen durch eine hohe Wärmeformbeständigkeit und eine überraschend hohe Beständigkeit bei der Alterung an heißer Luft aus.

Entsprechend dem Eigenschaftsprofil können die erfindungsgemäßen Formmassen daher überall im Spritzguß- und Extrusionssektor dort eingesetzt werden, wo hohe mehraxiale Zähigkeit in Kombination mit hoher Wärmeformbeständigkeit und hoher Heißluftbeständigkeit gefordert wird, z. B. bei Geräteteilen unter der Motorhaube von Kraftfahrzeugen und bei temperaturbelasteten Haushaltsgeräten.

Die nachfolgenden Beispiele erläutern die Erfindung.

Beispiele

1. Herstellung der Polydienlatices (Kern I)

a) In einem Reaktor wird unter Rühren folgende Emulsion bei 65 °C bis zum praktisch vollständigen Monomerumsatz innerhalb von ca. 22 Stunden polymerisiert :

100 Gew.-Teile Butadien
1,8 Gew.-Teile Na-Salz der disproportionierten Abietinsäure
0,257 Gew.-Teile Natriumhydroxid

0,3 Gew.-Teile n-Dodecylmercaptan
1,029 Gew.-Teile Na-ethylendiamintetraacetat
0,023 Gew.-Teile Kaliumpersulfat
760 Gew.-Teile Wasser

Es wird ein Latex erhalten, der Polybutadien-Teilchen eines mittleren Durchmessers ($d_{50}$) von 0,1 μm in einer Konzentration von ca. 35-36 % enthält (Latex 1a).

b) Nach Vorschrift 1a) wird bei 60-68 °C innerhalb von ca. 110 Stunden folgende Emulsion polymerisiert :

100,0 Gew.-Teile Butadien
70 Gew.-Teile Wasser
1,146 Gew.-Teile Na-Salz der disproportionierten Abietinsäure
0,055 Gew.-Teile Na-ethylendiamintetraacetat
0,137 Gew.-Teile Natriumhydroxid
0,028 Gew.-Teile Natriumhydrogencarbonat
0,282 Gew.-Teile Kaliumpersulfat

Es wird ein Latex erhalten, der Polybutadienteilchen eines mittleren Durchmessers ($d_{50}$) von 0,4 μm in einer Konzentration von ca. 58 % enthält (Latex 1b).

2. Herstellung von Acrylatkautschukteilchen, die Polybutadienkerne enthalten (Kern I mit 1. Hülle II)

a) In einem Reaktor wird unter Rühren bei 63 °C folgende Mischung vorgelegt :

200 Gew.-Teile Latex 1a
5 000 Gew.-Teile Wasser
14 Gew.-Teile Kaliumpersulfat
0,912 4 Gew.-Teile Triallylcyanurat
399,09 Gew.-Teile n-Butylacrylat

Innerhalb von 5 Stunden werden bei 63 °C folgende Mischungen in den Reaktor getrennt eindosiert :

Mischung A : 90 Gew.-Teile Na-Sulfonat von $C_{14}$-$C_{18}$-Kohlenwasserstoffen
11.900 Gew.-Teile Wasser
Mischung B : 23,09 Gew.-Teile Triallylcyanurat
10.101 Gew.-Teile n-Butylacrylat

Anschließend läßt man 3 Stunden bei 63 °C auspolymerisieren. Die gebildeten Polymerisate besitzen Gelgehalte von 85-95 Gew.%[1]) und mittlere Teilchendurchmesser $d_{50}$ von 0,5 μm (Latex 2a).

b) In einem Reaktor werden bei 65 °C vorgelegt :

2 168 Gew.-Teile Latex 1b
9 500 Gew.-Teile Wasser
27 Gew.-Teile Kaliumpersulfat
1 700 Gew.-Teile Wasser

Innerhalb von 4 Stunden werden bei 65 °C folgende Mischungen in den Reaktor getrennt eindosiert :

Mischung C : 9 214 Gew.-Teile n-Butylacrylat
15 Gew.-Teile Triallylcyanurat
Mischung D : 6 600 Gew.-Teile Wasser
156 Gew.-Teile Na-Sulfonat von $C_{14}$-$C_{18}$-Kohlenwasserstoffen.

Anschließend läßt man 4 Stunden bei 65 °C auspolymerisieren. Die gebildeten Polymerisate besitzen einen Gelgehalt von 91 Gew.-%[1]), einen Quellungsgrad von 6,5[1]) und eine breite Verteilung der mittleren Teilchendurchmesser von 0,2 bis 0,9 μm (Latex 2b), bestimmt durch Ultrazentrifugen-Messungen.

3. Herstellung der Pfropfprodukte B

In einem Reaktor werden vorgelegt und auf 65 °C aufgeheizt :

[1]) gemessen in Dimethylformamid bei 25 °C (M. Hoffmann, H. Krömer, R. Kuhn, Polymeranalytik I und II, Georg Thieme Verlag Stuttgart 1977).

a Gew.-Teile Latex 2a) bzw. 2b)

Es wird initiiert mit einer Mischung aus

b Gew.-Teile Kaliumpersulfat
c Gew.-Teile Wasser

Innerhalb von 4 Stunden läßt man bei 65 °C folgende Mischungen unter Rühren in den Reaktor einlaufen :

Mischung E : d Gew.-Teile Monomer 1
　　　　　　　 e Gew.-Teile Monomer 2
Mischung F : f　Gew.-Teile Wasser
　　　　　　　 g Gew.-Teile Na-Sulfonat von $C_{14}$-$C_{18}$-Kohlenwasserstoffen

Die Tabelle 1 gibt eine Zusammenstellung der Reaktionskomponenten für die Pfropfprodukte B mit den Typen K, L und M.

Tabelle 1

Propfprodukt B

| Typ | Latex Typ | a | b | c | d | | e | | f | g |
|-----|-----------|------|------|------|------|-----|-------|---|------|-----|
| K | 2a | 3088 | 3,5 | 145 | 273 | MMA | – | | 880 | 5 |
| L | 2a | 3088 | 3,5 | 145 | 76,4 | AN | 196,6 | S | 880 | 5 |
| M | 2b | 13000 | 18 | 1400 | 311 | AN | 799 | S | 1200 | 22 |

Zahlenangaben von a-g in Gewichtsteilen
MMA = Methylmethacrylat
AN = Acrylnitril
S = Styrol

Anschließend wird 4 Stunden bei 65 °C auspolymerisiert.
Die Pfropfprodukt-Latices K bis M werden nach Zugabe einer wäßrigen Stabilisatordispersion, entsprechend 0,25-1 Gew.-Teil eines phenolischen Antioxidants per 100 Gew.-Teile Latex-Feststoff, durch Elektrolyt- bzw. Säurezusatz koaguliert. Die resultierenden Pulver werden bei 70 °C im Vakuum getrocknet.

4. Herstellung von Vergleichs-Pfropfprodukten

Pfropfprodukt, Typ N

Copolymerisat aus n-Butylacrylat und dem Acrylsäureester des Tricyclodecenylalkohols mit Pfropfästen aus 75 Gew.-% Styrol und 25 Gew.-% Acrynitril (nach DE-OS 2 444 584).

Pfropfprodukt, Typ O

Copolymerisat aus einer Pfropfgrundlage aus

69,45 Gew.-Teilen n-Butylacrylat
0,35 Gew.-Teilen 1,3-Butylendiacrylat
0,28 Gew.-Teilen Allylmethacrylat

und einer Pfropfhülle aus

19,35 Gew.-Teilen Methylmethacrylat
9,97 Gew.-Teilen Allylmethacrylat

(nach DE-OS 27 26 256).

6

5. Herstellung der Mischungen

Auf einer kontinuierlich arbeitenden Zweiwellenmaschine der Fa. Werner & Pfleiderer (Typ ZSK 32) wurden folgende Polyester aufgeschmolzen :

Typ P : Poly(1,4-butylen-terephthalat) mit einer Intrinsic-Viskosität von 0,95 dl/g[1]
Typ Q : Poly(1,4-butylen-terephthalat) mit einer Intrinsic-Viskosität von 1,15 dl/g[1]
Typ R : Polyethylenterephthalat mit einer Intrinsic-Viskosität von 0,80 dl/g[1].

Durch einen zweiten Einfüllstützen wurde das Pfropfprodukt B in die Polyester-Schmelze eindosiert. Stickstoffbeschleierung ist zweckmäßig. Das Pfropfprodukt B wurde in der Schmelze homogen dispergiert. Es kann vorteilhaft sein, die Schmelze vor dem Austritt aus der Düse zu entgasen. Die Zylinder-Temperaturen wurden so gewählt, daß eine Massetemperatur von 255 °C bei Poly(1,4-Butylen-terephthalat) und von 275 °C bei Polyethylenterephthalat gewährleistet war. Der Schmelzstrang der Mischung aus Polyester und Pfropfprodukten wurde in Wasser abgekühlt, granuliert und getrocknet. Vom Granulat wurden auf einer üblichen Spritzgußmaschine Normkleinstäbe (nach DIN 53 453) und Platten von $3 \times 60 \times 60$ mm bei folgenden Verarbeitungstemperaturen verspritzt.

Poly(1,4-butylen-terephthalat)-Mischung :
    Massetemperatur 260 °C
    Formtemperatur 80 °C
Polyethylenterephthalat-Mischung :
    Massetemperatur 275 °C
    Formtemperatur 140 °C

Geprüft wurde die Schlagzähigkeit und Kerbschlagzähigkeit (nach DIN 53 543), Kugeldruckhärte (nach DIN 53 456), Wärmeformbeständigkeit nach Vicat (nach DIN 53 460), sowie die Schlagzähigkeit bei mehraxialer Belastung im EKWA-Test (nach DIN 53 443, Blatt 2, Durchschlagung einer Platte von $3 \times 60 \times 60$ mm mit einem Gewicht von 35 kg mit einem Durchstoßdorn mit kugelförmiger Spitze, Durchmesser 20 mm, bei einer Fallhöhe von 1 m). Die Fließnahtfestigkeit wurde im Zugversuch (nach DIN 53 455) an zweiseitig angespritzten Zugstäben geprüft. Die Ergebnisse sind in der Tabelle zusammengefaßt.

(Siehe Tabelle Seite 8 f.)

[1]) gemessen im Ubbelohde-Viskosimeter in Phenol/o-Dichlorbenzol (1 : 1 Gew.-Teile) bei 25 °C.

| Beispiele | Zusammensetzung | | | | $a_k$ [1] | $H_c$ [2] | Vicat B | EKWA [3] -Test | |
|---|---|---|---|---|---|---|---|---|---|
| | Polyester Typ | % | Pfropfprodukt Typ | % | KJ/m$^2$ | MPa | °C | W. sec | Zahl der Zähbrüche % |
| 1 | P | 95 | K | 5 | 3,2 | 112 | 179 | 90 | 90 |
| 2 | P | 90 | K | 10 | 4,5 | 103 | 165 | 109 | 100 |
| 3 | P | 97 | L | 3 | 3,5 | 117 | 175 | 92 | 90 |
| 4 | P | 95 | L | 5 | 4,0 | 110 | 170 | 111 | 100 |
| 5 | P | 90 | L | 10 | 6,0 | 101 | 163 | 107 | 100 |
| 6 | P | 80 | L | 20 | 13,0 | 79 | 134 | 99 | 100 |
| 7 | P | 70 | L | 30 | 16,8 | 60 | 116 | 94 | 100 |
| 8 | P | 80 | M | 20 | 13,5 | 77 | 133 | 101 | 100 |
| 9 | Q | 80 | L | 20 | 13,8 | 76 | 135 | 105 | 100 |
| 10 | R | 95 | L | 5 | 3,5 | 128 | 173 | 109 | 90 |
| 11 | R | 90 | L | 10 | 5,2 | 120 | 169 | 106 | 100 |
| Vergleichsbeispiele | | | | | | | | | |
| 12 | P | 100 | - | - | 2,3 | 123 | 182 | 15 | 0 |
| 13 | P | 95 | N | 5 | 2,5 | 108 | 171 | 32 | 20 |
| 14 | P | 95 | O | 5 | 2,6 | 109 | 172 | 37 | 30 |

Der Schlagzähigkeitstest ergab für die Proben aller Beispiele das Ergebnis « nicht gebrochen ».
Die Fließnahtfestigkeit[4] für alle Proben lag bei 100 %.

[1] Kerbschalgzähigkeit
[2] Kugeldruckhärte
[3] EKWA : Elektronische Kraft/Weg-Aufnahme
[4] (Reißfestigkeit mit Fließnaht · 100)/Reißfestigkeit ohne Fließnaht

0 050 262

**Ansprüche**

1. Thermoplastische Polyester-Formmassen aus

A) 60-99 Gew.-% (bezogen auf A + B) eines gesättigten Polyesters einer aromatischen Dicarbonsäure und einem aliphatischen oder cycloaliphatischen Diol, wobei dieser Polyester A eine Intrinsic-Viskosität von 0,5 bis 2,0 dl/g (gemessen in einem Gemisch aus Phenol und o-Dichlorbenzol (50/50 Gew.-%) bei 25 °C im Ubbelohde-Viskosimeter) besitzt, und

B) 1-40 Gew.-% (bezogen auf A + B) eines teilchenförmigen Pfropfproduktes aus

I einem vernetzten Dienkautschuk als Kern,

II einem vernetzten Acrylat-Kautschuk als erster Hülle, und

III einem Polymerisat oder Copolymerisat aus harzbildenden Monomeren aus der Reihe Styrol, α-Methylstyrol, Acrylnitril, Methacrylnitril, Acrylsäureester, Methacrylsäureester oder Mischungen daraus als zweiter Hülle.

2. Thermoplastische Polyester-Formmassen nach Anspruch 1, dadurch gekennzeichnet, daß das Mengenverhältnis des Kerns I zur ersten Hülle II 0,1 zu 99,9 bis 80 zu 20 Gew.-Teilen beträgt.

3. Thermoplastische Polyester-Formmassen nach Ansprüchen 1 und 2, dadurch gekennzeichnet, daß der Anteil der zweiten Hülle III am gesamten Pfropfprodukt B 10 bis 80 Gew.-% beträgt.

4. Thermoplastische Polyester-Formmassen nach Ansprüchen 1 bis 3, dadurch gekennzeichnet, daß die zweite Hülle III aus Gemischen von Styrol und Acrylnitril im Gewichtsverhältnis 90 : 10 bis 50 : 50 besteht.

5. Thermoplastische Polyester-Formmassen nach Ansprüchen 1 bis 4, dadurch gekennzeichnet, daß die zweite Hülle III aus Methylmethacrylat besteht.

6. Thermoplastische Polyester-Formmassen nach Ansprüchen 1 bis 5, dadurch gekennzeichnet, daß die erste Hülle II mit cyclischen Monomeren, die mindestens drei ethylenisch ungesättigte Gruppen aufweisen, vernetzt ist.

7. Thermoplastische Formmassen nach Ansprüchen 1 bis 6, dadurch gekennzeichnet, daß der Polyester Polyethylenterephthalat ist.

8. Thermoplastische Polyester-Formmassen nach Ansprüchen 1 bis 6, dadurch gekennzeichnet, daß der Polyester Poly(1,4-butylen-terephthalat) ist.

9. Thermoplastische Polyester-Formmassen nach Ansprüchen 1 bis 8, dadurch gekennnzeichnet, daß die Formmassen bis zu 60 Gew.-% Glasfasern enthalten.

10. Thermoplastische Polyester-Formmassen nach Ansprüchen 1-9, dadurch gekennzeichnet, daß Polyester A ein Gemisch aus

1-99 Gew.-% Polyethylenterephthalat und
99- 1 Gew.-% Poly(1,4-butylenterephthalat) ist.

**Claims**

1. Thermoplastic polyester moulding compositions consisting of

A) 60-99 % by weight (based on A + B) of a saturated polyester of an aromatic dicarboxylic acid and an aliphatic or cycloaliphatic diol, this polyester A having an intrinsic viscosity of 0.5 to 2.0 dl/g (measured in a mixture of phenol and o-dichlorobenzene (50/50 % by weight) at 25 °C in an Ubbelohde viscosimeter), and

B) 1-40 % by weight (based on A + B) of a particulate graft product consisting of

I a cross-linked diene rubber as the core,

II a cross-linked acrylate rubber as the first shell, and

III a polymer or copolymer of resin-forming monomers from the series comprising styrene, α-methyl styrene, acrylonitrile, methacrylonitrile, acrylic acid ester, methacrylic acid ester or mixtures thereof as the second shell.

2. Thermoplastic polyester moulding compositions according to Claim 1, characterised in that the quantitative ratio of the core I to the first shell II is 0.1 : 0.99 to 80 : 20 parts by weight.

3. Thermoplastic polyester moulding compositions according to Claims 1 and 2, characterised in that the proportion of the second shell III in the total graft product B is 10 to 80 % by weight.

4. Thermoplastic polyester moulding compositions according to Claims 1 to 3, characterised in that the second shell III consists of mixtures of styrene and acrylonitrile in a ratio by weight of 90 : 10 to 50 : 50.

5. Thermoplastic polyester moulding compositions according to Claims 1 to 4, characterised in that the second shell III consists of methyl methacrylate.

6. Thermoplastic polyester moulding compositions according to Claims 1 to 5, characterised in that the first shell II is cross-linked with cyclic monomers which contain at least three ethylenically unsaturated groups.

7. Thermoplastic moulding compositions according to Claims 1 to 6, characterised in that the polyester is polyethylene terephthalate.

8. Thermoplastic polyester moulding compositions according to Claims 1 to 6, characterised in that the polyester is poly(1,4-butylene-terephthalate).

9. Thermoplastic polyester moulding compositions according to Claims 1 to 8, characterised in that the moulding compositions contain up to 60 % by weight of glass fibres.

10. Thermoplastic polyester moulding compositions according to Claims 1-9, characterised in that polyester A is a mixture of

1-99 % by weight of polyethylene terephthalate and
99- 1 % by weight of poly(1,4-butylene-terephthalate).

**Revendications**

1. Matières à mouler thermoplastiques en polyester consistant en

A) 60 à 99 % en poids (par rapport à A + B) d'un polyester saturé d'un acide dicarboxylique aromatique et d'un diol aliphatique ou cycloaliphatique, ce polyester A ayant une viscosité intrinsèque de 0,5 à 2,0 dl/g (mesure dans un mélange à poids égaux de phénol et d'o-dichlorobenzène à 25 °C au viscosimètre d'Ubbelohde) et

B) 1 à 40 % en poids (par rapport à A + B) d'un produit de greffage en particules de

I un caoutchouc diénique réticulé en tant que noyau,
II un caoutchouc d'acrylate réticulé en tant que première enveloppe et
III un polymère ou copolymère de monomères formant des résines pris dans le groupe du styrène, de l'α-méthylstyrène, de l'acrylonitrile, du méthacrylonitrile, des esters acryliques, des esters méthacryliques ou leurs mélanges, en tant que deuxième enveloppe.

2. Matières à mouler thermoplastiques en polyester selon la revendication 1, caractérisées en ce que les proportions relatives entre le noyau I et la première enveloppe II sont de 0,1 : 99,9 à 80 : 20 parties en poids.

3. Matières à mouler thermoplastiques en polyester selon les revendications 1 et 2, caractérisées en ce que la proportion de la deuxième enveloppe III sur le produit de greffage total B est de 10 à 80 % en poids.

4. Matières à mouler thermoplastiques en polyester selon les revendications 1 à 3, caractérisées en ce que la deuxième enveloppe III consiste en mélanges de styrène et d'acrylonitrile dans des proportions en poids de 90 : 10 à 50 : 50.

5. Matières à mouler thermoplastiques en polyester selon les revendications 1 à 4, caractérisées en ce que la deuxième enveloppe III consiste en méthacrylate de méthyle.

6. Matières à mouler thermoplastiques en polyester selon les revendications 1 à 5, caractérisées en ce que la première enveloppe II est réticulée par des monomères cycliques contenant au moins 3 groupes à insaturation éthylénique.

7. Matières à mouler thermoplastiques selon les revendications 1 à 6, caractérisées en ce que le polyester est un polytéréphtalate d'éthylène.

8. Matières à mouler thermoplastiques en polyester selon les revendications 1 à 6, caractérisées en ce que le polyester est un poly(téréphtalate de 1,4-butylène).

9. Matières à mouler thermoplastiques en polyester selon les revendications 1 à 8, caractérisées en ce qu'elles contiennent jusqu'à 60 % en poids de fibres de verre.

10. Matières à mouler thermoplastiques en polyester selon les revendications 1 à 9, caractérisées en ce que le polyester A est un mélange de

1 à 99 % en poids de polytéréphtalate d'éthylène et
99 à 1 % en poids de poly(téréphtalate de 1,4-butylène).